# EUROPÄISCHE PATENTSCHRIFT

(11) **EP 1 698 793 B1**
(45) Veröffentlichungstag und Bekanntmachung des Hinweises auf die Patenterteilung: **11.06.2008**
(21) Anmeldenummer: 06002717.4
(22) Anmeldetag: 10.02.2006
(51) Int. Cl.: F16D 25/08, B60T 11/16, F15B 7/08

(54) **Geberzylinder**
Master cylinder
Maître-cylindre

(30) Priorität: 03.03.2005 GB 0504452
(43) Veröffentlichungstag der Anmeldung: 06.09.2006
(73) Patentinhaber: LuK Lamellen und Kupplungsbau Beteiligungs KG, 77815 Bühl (DE)
(72) Erfinder: Leger, Frédéric, 28140 Terminiers (FR); Sainton, Denis, 45520 Chevilly (FR)

(56) Entgegenhaltungen:
- EP-A- 0 416 189
- DE-A1- 4 434 254
- FR-A- 2 755 480
- US-A- 2 396 155
- US-A- 4 192 224

## Beschreibung

Die vorliegende Erfindung betrifft einen hydraulischen Geberzylinder zum Betätigen von Baugruppen wie Fahrzeugkupplungen oder -bremsen, in denen im Geberzylinder im Betrieb der Druck einer Flüssigkeit erhöht wird, die über eine Auslassöffnung im Geberzylinder in einen Nehmerzylinder gedrückt wird, um die gewünschte Funktion auszuführen.

Üblicherweise enthalten solche Geberzylinder einen Kolben, der durch Betätigung eines Pedals gleitend in einer Bohrung bewegt werden kann, um in einer Arbeitskammer den Druck einer Flüssigkeit zu erhöhen, die dann über die Auslassöffnung im Geberzylinder in den zugehörigen Nehmerzylinder gedrückt wird.

Bei solchen Kolben-Geberzylindereinheiten treten Probleme auf, die mit der zuverlässigen Abdichtung des gleitenden Kolbens in der Bohrung und der Übertragung der Betätigungskraft vom Pedal auf den Kolben zusammenhängen.

Ein Geberzylinder gemäß dem Oberbegriff des Anspruchs 1 ist aus FR-A-2 755 480 bekannt.

Eine Aufgabe der vorliegenden Erfindung besteht darin, einen verbesserten Geberzylinder bereitzustellen, der sich zur Verwendung beim Betätigen von Fahrzeugkupplungen und -bremsen eignet.

Somit wird gemäß der vorliegenden Erfindung ein Geberzylinder mit einem als Drehschieberbauteil ausgebildeten Kolben bereitgestellt, der in einer Arbeitskammer im abgedichteten Zustand drehbar bewegt werden kann, wobei die Arbeitskammer eine mit einem Flüssigkeitsbehälter zu verbindende Einlassöffnung und eine mit einem Nehmerzylinder zu verbindende Auslassöffnung aufweist und das Drehen des Drehschieberbauteils so erfolgt, dass der Druck der Flüssigkeit auf einer Seite des Drehschiebers erhöht wird, um die Flüssigkeit durch die Auslassöffnung zu drücken, wobei das Drehschieberbauteil ein Einwegventil enthält.

Bei einer bevorzugten Form der Erfindung ist das Drehschieberbauteil drehbar an einer Welle befestigt, die über die Kammer hinausragt, wobei das Drehschieberbauteil durch eine Drehung der Welle in Drehung versetzt und der Druck der Flüssigkeit erhöht wird.

Vorzugsweise wird die Welle durch ein Betätigungspedal um ihre Achse gedreht.

Vorzugsweise schließt sich das Einwegventil, wenn das Drehschieberbauteil gedreht wird, um den Druck der Flüssigkeit zu erhöhen, und das sich andererseits öffnet, damit die Flüssigkeit durch das Drehschieberbauteil fließen kann, wenn das Drehschieberbauteil plötzlich in der entgegengesetzten Richtung gedreht wird, was dann passieren kann, wenn der Fuß des Fahrzeugführers vom Betätigungspedal abrutscht (so genanntes "Rückspringen"). Dies trägt dazu bei, dass im Geberzylinder kein Unterdruck entsteht.

Dieses Ventil ist auch so angeordnet, dass es die Flüssigkeit durch die Einlassöffnung und durch den Drehschieber in die Arbeitskammer und über die Auslassöffnung in den restlichen Teil des Betätigungssystems fließen lässt, wenn der Drehschieber vollständig zurückgesetzt ist. Dadurch kann über den Geberzylinder das zugehörige Betätigungssystem nachgefüllt werden, um den Verschleiß der vom Geberzylinder betätigten Kupplung oder Bremsen auszugleichen. Ferner wird durch das Ventil die Ersteinfüllung der Flüssigkeit aus dem zugehörigen Flüssigkeitsbehälter erleichtert.

Im Folgenden wird anhand eines Beispiels und unter Bezug auf die beiliegenden Zeichnungen eine Ausführungsart der vorliegenden Erfindung beschrieben.

Es zeigen:
Figur 1 eine perspektivische Ansicht einer Kolben-Geberzylindereinheit gemäß der vorliegenden Erfindung, wobei der Kolben als Drehschieber ausgebildet ist, der an einer Befestigungsschelle angebracht ist und durch ein Pedal betätigt wird;
Figur 2 eine perspektivische Ansicht des Geberzylinders mit einem optional vorgesehenen zugehörigen Drehwinkelsensor;
Figur 3 und 4 vertikale Querschnitte durch den Körper des Geberzylinders, bei denen das Drehschieberbauteil vollständig zurückgesetzt bzw. nur teilweise um die Achse gedreht ist;
Figur 5 die Wirkungsweise eines in den Drehschieber eingebauten Ventils in vergrößertem Maßstab;
Figur 6 eine alternative Form der Dichtung zwischen Ventil und Drehschieber und
Figur 7 eine alternative Anordnung von Drehschieberdichtung und Drehzapfen.

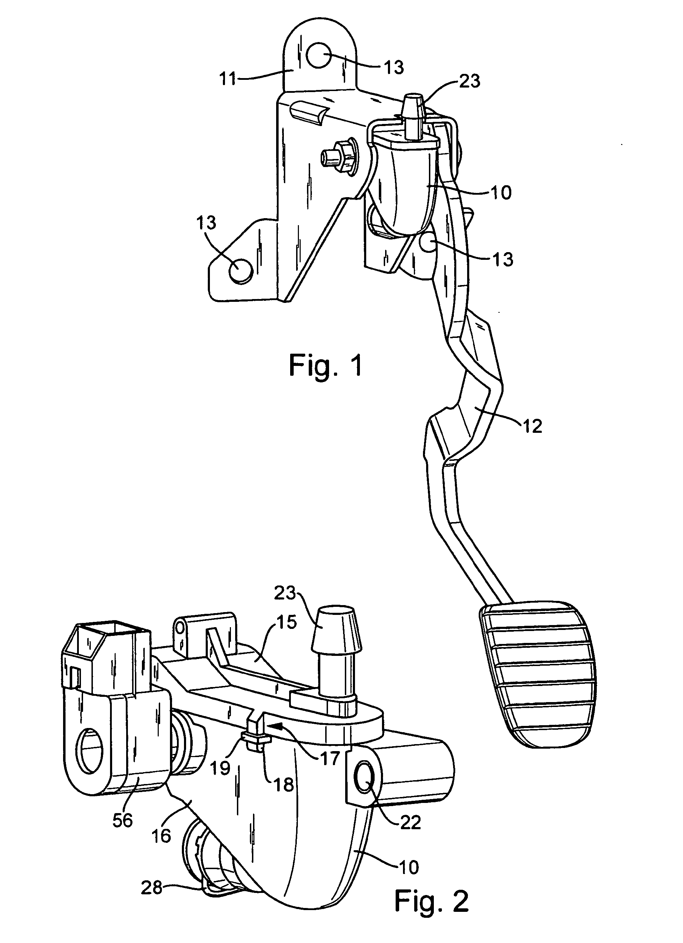

Figur 1 zeigt eine Kolben-Geberzylindereinheit 10 mit als Drehschieber ausgebildetem Kolben zum Betätigen einer Fahrzeugkupplung, der an einer Befestigungsschelle 11 angebracht und mit einem Betätigungspedal 12 verbunden ist. Die Befestigungsschelle 11 selbst ist über Befestigungslöcher 13 an der (nicht gezeigten) Trennwand zum Motorraum eines Fahrzeugs angebracht.

Die Figuren 2 bis 4 zeigen, dass der Geberzylinder einen Kunststoffkörper 14 mit einem Oberteil 15 und einem Unterteil 16 umfasst. Diese beiden Teile sind durch Verbindungsstücke 17 miteinander verbunden, die in Abständen um die Kontaktfläche zwischen Ober- und Unterteil herum angeordnet sind. Jedes Verbindungsstück 17 umfasst eine biegsame Verriegelung 18 am Oberteil, die durch einen am Unterteil angegossenen Ring 19 ragt und unter diesem einrastet. Das Oberteil und das Unterteil sind durch einen im Oberteil 15 in eine Nut 21 eingelegten O-Ring 20 gegeneinander abgedichtet. Der Unterteil 16 enthält Befestigungslöcher 22 zum Anbringen des Geberzylindergehäuses an der Befestigungsschelle 11.

Das Oberteil 15 enthält auch eine Einlassöffnung 23, über die eine Verbindung zum (nicht gezeigten) zugehörigen Flüssigkeitsbehälter hergestellt wird.

Das Unterteil 16 enthält eine Auslassöffnung 24, in welche ein an einer Leitung 26 befestigtes Anschlussstück 25 gesteckt ist. Das Anschlussstück 25 wird in der Auslassöffnung 24 durch einen O-Ring 27 abgedichtet und durch einen Drahtfederring 28 in der Auslassöffnung gesichert. Die Leitung 26 ist mit einem (nicht gezeigten) Nehmerzylinder verbunden.

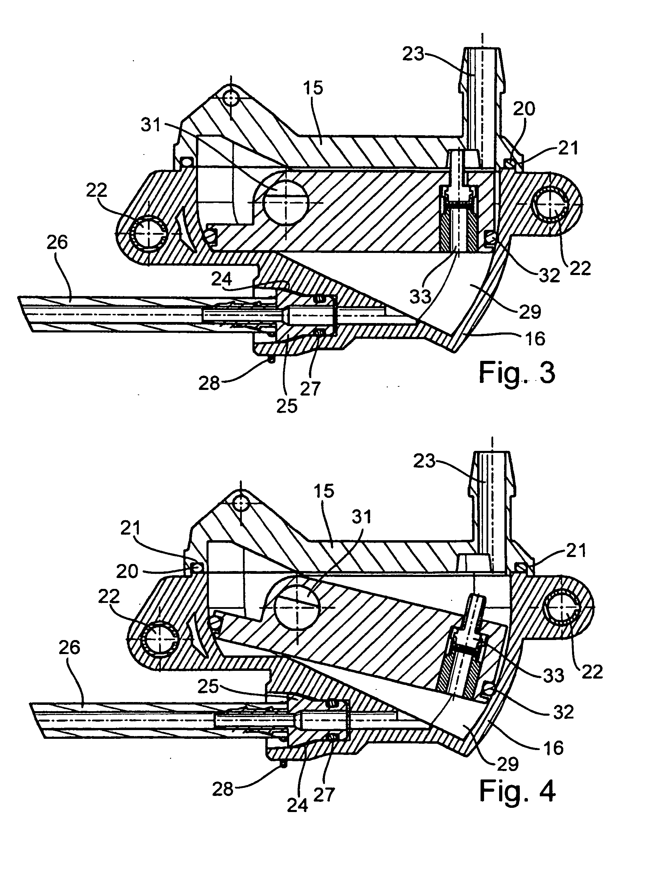

Das Unterteil 16 enthält auch eine Arbeitskammer 29, in der ein Drehschieberbauteil 30 drehbar gelagert ist. Das Drehschieberbauteil 30 ist auf einer Welle 31 befestigt, die durch die Wände des Unterteils 16 ragt und gegen diese abgedichtet ist. Das Betätigungspedal 12 ist so mit der Welle 31 verbunden, dass beim Durchtreten des Pedals 12 die Welle 31 und somit das Drehschieberbauteil 30 in der Arbeitskammer 29 in Drehung versetzt wird. Ferner ist eine (nicht gezeigte) Rückstellfeder eingebaut, die auf das Pedal 12 einwirkt und das Pedal in die in Figur 3 gezeigte vollständig angehobene Stellung zurückdrückt.

Außerdem kann mit der Welle 31 auch ein Drehwinkelsensor 56 verbunden sein, der die Stellung des Pedals 12 anzeigt.

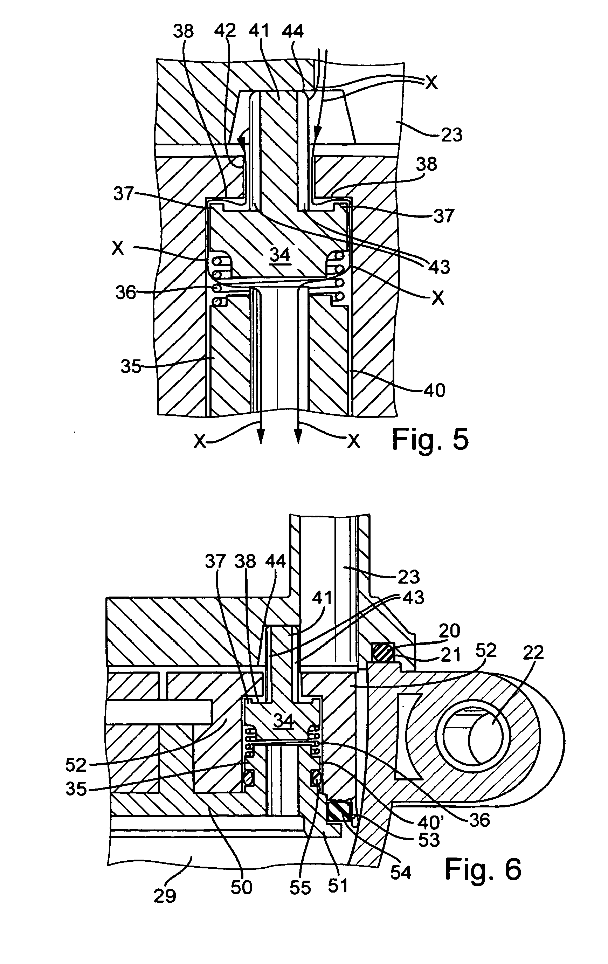

Das Drehschieberbauteil 30 ist in der Arbeitskammer 29 durch eine O-Ringdichtung 32 abgedichtet. In einer Bohrung 40 im Drehschieberbauteil 30 ist ein Ventil 33 (siehe Figur 5) angebracht, das einen Schließkörper 34, eine Hülse 35 in der Bohrung 40 und eine Feder 36 aufweist. Die Feder 36 wirkt zwischen dem Schließkörper 34 und der Hülse 35. Die Feder 36 drückt den am Schließkörper 34 gebildeten Ventilsitz 37 normalerweise gegen die in der Bohrung 40 gebildete Dichtfläche 38. Der Schließkörper 34 weist einen Stift 41 auf, der durch einen Endteil 42 der Bohrung 40 ragt und einen Durchgangsschlitz 43 aufweist.

Wenn sich das Drehschieberbauteil 30 gemäß Figur 3 in einer Endlage befindet (entsprechend der vollständig angehobenen Stellung des Pedals 12), stößt der Stift 41 gegen die Anschlagfläche 44 in der Einlassöffnung 23. Dadurch wirkt das Schließkörper 34 leicht dem Druck der Feder 36 entgegen, sodass der Ventilsitz 37 von der Dichtfläche 38 abhebt und die Flüssigkeit von der Einlassöffnung 23 über den Schlitz 43 zur anderen Seite des Drehschieberbauteils 30 fließen kann, was in Figur 5 durch die Pfeile X angezeigt wird. Dieser Flüssigkeitsstrom dient dazu, das System beim ersten Mal mit Flüssigkeit aus dem Flüssigkeitsbehälter zu füllen und Flüssigkeit durch das Drehschieberbauteil 30 fließen zu lassen, um die Flüssigkeit unterhalb des Drehschieberbauteils 30 aufzufüllen und so den Verschleiß der Kupplung zu kompensieren.

Sobald das Pedal 12 niedergedrückt wird, beginnt sich das Drehschieberbauteil 30 in Richtung Y in Figur 4 zu drehen, sodass der Stift 41 nicht mehr die Anschlagfläche 44 berührt und somit der Ventilsitz 34 gegen die Dichtfläche 38 drückt, wodurch der Flüssigkeitsstrom durch das Drehschieberbauteil 30 unterbrochen und der Druck in der Arbeitskammer 29 unterhalb des Drehschieberbauteils 30 erhöht wird, sodass der mit der Leitung 26 verbundene Nehmerzylinder normal funktioniert.

Sollte der Fuß des Fahrzeugführers zum Beispiel vom Pedal 12 abrutschen, sodass das Pedal 12 sofort hochspringt und das Drehschieberbauteil 30 in die in Figur 3 gezeigte Endstellung zurückkehrt (so genanntes "Rückspringen"), geht das Ventil 33 auf und die Flüssigkeit kann durch das Drehschieberbauteil 30 fließen, sodass unterhalb des Drehschieberbauteils 30 kein Unterdruck entstehen kann.

Figur 6 zeigt eine alternative Form, bei welcher ähnliche Funktionselemente wie in Figur 5 durch gleiche Bezugsnummern bezeichnet sind. In Figur 6 ist die Hülse 35' in dem Teil 50 des Drehschieberbauteils 30 integriert, das auch eine umlaufende Lippe 51 enthält. Der andere Teil 52 des Drehschieberbauteils 30 besteht aus einem Material wie Nylon und weist am Rand eine umlaufende flexible Lippe 53 auf, die als Dichtung des Drehschieberbauteils 30 fungiert. Die Lippe 53 wird durch eine Gummifüllung 54 gegen die Wände der Kammer 29 gedrückt, die zwischen die Lippen 51 und 53 gequetscht wird. Die Hülse 35' wird in der Bohrung 40' durch einen O-Ring 55 abgedichtet.

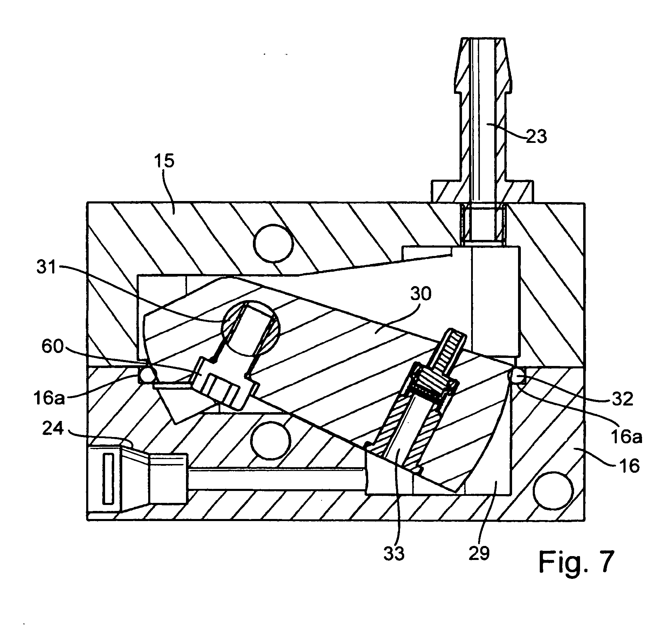

Figur 7 zeigt eine alternative Anordnung, bei der Bauteile mit ähnlicher Funktion wie in den Figuren 1 bis 5 durch gleiche Bezugsnummern bezeichnet werden. Bei dieser Anordnung ist die Dichtung 32 nicht am Drehschieberbauteil 30, sondern in einer Nut 16a im Unterteil 16 des Geberzylinders untergebracht. Ferner wird das Drehschieberbauteil 30 mittels einer Klemmschraube 60 an der Welle 31 befestigt.

## Patentansprüche

1. Geberzylinder mit einem als Drehschieber ausgebildeten Kolben Drehschieberbauteil (30), der in einer Arbeitskammer im abgedichteten Zustand drehend bewegt werden kann, wobei die Arbeitskammer (29) eine mit einem Flüssigkeitsbehälter zu verbindende Einlassöffnung (23) und eine mit einem Nehmerzylinder zu verbindende Auslassöffnung aufweist, wobei durch das Drehen des Drehschieberbauteils (30) der Druck der Flüssigkeit auf einer Seite des Drehschieberbauteils (30) erhöht wird, um die Flüssigkeit durch die Auslassöffnung zu drücken, **dadurch gekennzeichnet, dass** das Drehschieberbauteil (30) ein Einwegventil (33) enthält.

2. Geberzylinder nach Anspruch 1, bei welchem das Drehschieberbauteil (30) drehbar an einer Welle (31) befestigt ist, die über die Arbeitskammer (29) hinausragt, und durch die Drehung der Welle (31) das Drehschieberbauteil (30) in Drehung versetzt und dadurch der Druck der Flüssigkeit erhöht wird.

3. Geberzylinder nach Anspruch 2, bei welchem die Welle (31) durch ein Betätigungspedal (12) in Drehung versetzt wird.

4. Geberzylindern nach einem der Ansprüche 1 bis 3, bei welchem das Einwegventil (33) so angeordnet ist, dass es sich schließt, wenn das Drehschieberbauteil (30) gedreht wird, um den Druck der Flüssigkeit zu erhöhen, und dass es sich öffnet und die Flüssigkeit um das Drehschieberbauteil (30) herumfließen lässt, wenn das Drehschieberbauteil (30) plötzlich in der entgegengesetzten Richtung gedreht wird, was dann passieren kann, wenn der Fuß des Fahrzeugführers vom Betätigungspedal (12) abrutscht.

5. Geberzylindern nach Anspruch 4, bei welchem das Ventil (33) auch so angeordnet ist, dass die Flüssigkeit durch die Einlassöffnung (23) und durch das Drehschieberbauteil (30) in die Arbeitskammer (29) und über die Auslassöffnung in den restlichen Teil des Betätigungssystems fließen kann, wenn sich das Drehschieberbauteil (30) in einer vollständig zurückgesetzten Stellung befindet.

6. Geberzylinder nach Anspruch 1, **dadurch gekennzeichnet, dass** das Drehschieberbauteil (30) aus Kunststoffmaterial gebildet ist und die Drehbewegung des Drehschieberbauteils (30) in der Arbeitskammer (29) dadurch abgedichtet wird, dass eine Kunststofflippe am Drehschieberbauteil gegen die Wände der Arbeitskammer (29) gedrückt wird.

7. Geberzylinder nach Anspruch 6, **dadurch gekennzeichnet, dass** das Drehschieberbauteil (30) zwei Teile aufweist, wobei an einem Teil eine Dichtungslippe ausgebildet ist und zwischen die Dichtungslippe und dem anderen Teil des Drehschieberbauteils (30) ein elastisches Bauteil eingequetscht wird, damit die Dichtungslippe gegen die Wände der Arbeitskammer (29) gedrückt wird.

8. Geberzylinder nach einem der Ansprüche 1 bis 7, **dadurch gekennzeichnet, dass** das Drehschieberbauteil (30) durch eine an diesem angebrachte Dichtung (32) gegen die Arbeitskammer (29) abgedichtet wird.

9. Geberzylinder nach einem der Ansprüche 1 bis 7, **dadurch gekennzeichnet, dass** das Drehschieberbauteil (30) durch eine in den Wänden der Arbeitskammer (29) angebrachte Dichtung (32) gegen die Arbeitskammer abgedichtet wird.

## Claims

1. Master cylinder with a rotary-slide component (30) which comprises a piston designed as a rotary slide and which can be moved in rotation in a working chamber in the sealed-off state, the working chamber (29) having an inlet orifice (23) to be connected to a fluid container and an outlet orifice to be connected to a slave cylinder, the pressure of the fluid on one side of the rotary-slide component (30) being increased as a result of the rotation of the rotary-slide component (30), in order to press the fluid through the outlet orifice, **characterized in that** the rotary-slide component (30) contains a one-way valve (33).

2. Master cylinder according to Claim 1, in which the rotary-slide component (30) is fastened rotatably to a shaft (31) which projects beyond the working chamber (29), and, as a result of the rotation of the shaft (31), the rotary-slide component (30) is set in rotation and the pressure of the fluid is thereby increased.

3. Master cylinder according to Claim 2, in which the shaft (31) is set in rotation by means of an actuating pedal (12).

4. Master cylinder according to one of Claims 1 to 3, in which the one-way valve (33) is arranged such that it closes when the rotary-slide component (30) is rotated, in order to increase the pressure of the fluid, and such that it opens and causes the fluid to flow around the rotary-slide component (30) when the rotary-slide component (30) is suddenly rotated in the opposite direction, which may happen when the foot of the vehicle driver slips off from the actuating pedal (12).

5. Master cylinder according to Claim 4, in which the valve (33) is also arranged such that the fluid can flow through the inlet orifice (23) and through the rotary-slide component (30) into the working chamber (29) and via the outlet orifice into the remaining part of the actuating system when the rotary-slide component (30) is in a completely set-back position.

6. Master cylinder according to Claim 1, **characterized in that** the rotary-slide component (30) is formed from plastic material, and the rotational movement of the rotary-slide component (30) in the working chamber (29) is sealed off **in that** a plastic lip on the rotary-slide component is pressed against the walls of the working chamber (29).

7. Master cylinder according to Claim 6, **characterized in that** the rotary-slide component (30) has two parts, a sealing lip being formed on one part, and an elastic component being pinched between the sealing lip and the other part of the rotary-slide component (30), so that the sealing lip is pressed against the walls of the working chamber (29).

8. Master cylinder according to one of Claims 1 to 7, **characterized in that** the rotary-slide component (30) is sealed off, by means of a seal (32) attached to it, with respect to the working chamber (29).

9. Master cylinder according to one of Claims 1 to 7, **characterized in that** the rotary-slide component (30) is sealed off, by means of a seal (32) attached in the walls of the working chamber (29), with respect to the working chamber.

## Revendications

1. Maître-cylindre comprenant un composant piston-tiroir rotatif (30) réalisé sous forme de tiroir rotatif, qui peut être déplacé en rotation dans l'état scellé dans une chambre de travail, la chambre de travail (29) présentant une ouverture d'entrée (23) à connecter à un récipient de liquide et une ouverture de sortie à connecter à un cylindre récepteur, la rotation du composant de tiroir rotatif (30) augmentant la pression du liquide d'un côté du composant de tiroir rotatif (30), afin de pousser le liquide à travers l'ouverture de sortie, **caractérisé en ce que** le composant de tiroir rotatif (30) contient une soupape unidirectionnelle (33).

2. Maître-cylindre selon la revendication 1, dans lequel le composant de tiroir rotatif (30) est fixé de manière rotative sur un arbre (31) qui dépasse hors de la chambre de travail (29), et dans lequel la rotation de l'arbre (31) entraîne la rotation du composant de tiroir rotatif (30) et de ce fait augmente la pression du liquide.

3. Maître-cylindre selon la revendication 2, dans lequel l'arbre (31) est mis en rotation par une pédale de commande (12).

4. Maître-cylindre selon l'une quelconque des revendications 1 à 3, dans lequel la soupape unidirectionnelle (33) est disposée de telle sorte qu'elle se ferme lorsque le composant de tiroir rotatif (30) est tourné, afin d'augmenter la pression du liquide, et en ce qu'elle s'ouvre et laisse circuler le liquide autour du composant de tiroir rotatif (30) lorsque le composant de tiroir rotatif (30) est soudainement tourné dans le sens inverse, ce qui peut se produire lorsque le pied du conducteur du véhicule glisse de la pédale de commande (12).

5. Maître-cylindre selon la revendication 4, dans lequel la soupape (33) est également disposée de telle sorte que le liquide puisse s'écouler à travers l'ouverture d'entrée (23) et à travers le composant de tiroir rotatif (30) dans la chambre de travail (29) et par le biais de l'ouverture de sortie dans la partie restante du système de commande lorsque le composant de tiroir rotatif (30) se trouve dans une position complètement rentrée.

6. Maître-cylindre selon la revendication 1, **caractérisé en ce que** le composant de tiroir rotatif (30) est formé en matière plastique et le mouvement de rotation du composant de tiroir rotatif (30) dans la chambre de travail (29) est scellé par le fait qu'une lèvre en plastique sur le composant de tiroir rotatif est pressée contre les parois de la chambre de travail (29).

7. Maître-cylindre selon la revendication 6, **caractérisé en ce que** le composant de tiroir rotatif (30) présente deux parties, une lèvre d'étanchéité étant réalisée sur une partie et un composant élastique étant comprimé entre la lèvre d'étanchéité et l'autre partie du composant de tiroir rotatif (30), afin que la lèvre d'étanchéité soit pressée contre les parois de la chambre de travail (29).

8. Maître-cylindre selon l'une quelconque des revendications 1 à 7, **caractérisé en ce que** le composant de tiroir rotatif (30) est scellé vis-à-vis de la chambre de travail (29) par un joint d'étanchéité (32) installé sur celui-ci.

9. Maître-cylindre selon l'une quelconque des revendications 1 à 7, **caractérisé en ce que** le composant de tiroir rotatif (30) est scellé vis-à-vis de la chambre de travail par un joint d'étanchéité (32) installé dans les parois de la chambre de travail (29).
